Europäisches Patentamt

**European Patent Office**

**Office européen des brevets**

(11) Veröffentlichungsnummer: **0 017 898**
**B1**

(12) **EUROPÄISCHE PATENTSCHRIFT**

(45) Veröffentlichungstag der Patentschrift:
**27.12.84**

(21) Anmeldenummer: **80101871.4**

(22) Anmeldetag: **08.04.80**

(51) Int. Cl.³: **H 04 Q 7/04, H 04 M 3/42**

(54) **Funkanlage.**

(30) Priorität: **14.04.79 DE 2915308**

(43) Veröffentlichungstag der Anmeldung:
**29.10.80 Patentblatt 80/22**

(45) Bekanntmachung des Hinweises auf die Patenterteilung:
**27.12.84 Patentblatt 84/52**

(84) Benannte Vertragsstaaten:
**AT BE DE FR GB IT LU NL SE**

(56) Entgegenhaltungen:
**DE - A - 2 537 683**
**GB - A - 1 536 843**
**US - A - 2 599 097**

**IBM TECHNICAL DISCLOSURE BULLETIN, Band 9, Nr. 3, August 1966, Seiten 262-263, New York, U.S.A., COZZA et al.: "Audio identification of a calling subscriber's number in a telephone switching system" NACHRICHTENTECHNISCHE ZEITSCHRIFT, Band 29, 1976, Heft 8, Seiten 576-578, Berlin, DE. KANGASLUOMA: "Das geplante finnische Funkrufsystem"**

(73) Patentinhaber: **ROBERT BOSCH GMBH, Postfach 50, D-7000 Stuttgart 1 (DE)**

(72) Erfinder: **Dallmann, Horst, Wiersichweg 5, D-1000 Berlin 13 (DE)**
Erfinder: **Hellwig, Günter, Ing.grad., Ringslebenstrasse 68, D-1000 Berlin 47 (DE)**
Erfinder: **Wazeck, Jürgen, Dr.-Ing., Wiltinger Strasse 20c, D-1000 Berlin 28 (DE)**

(74) Vertreter: **Schmidt, Hans-Ekhardt, Robert Bosch GmbH Geschäftsbereich Elektronik Patent- und Lizenzabteilung Forckenbeckstrasse 9-13, D-1000 Berlin 33 (DE)**

## Beschreibung

Die Erfindung geht aus von einer Funkanlage nach der Gattung des Hauptanspruchs. Solche Funkanlagen, bei denen über elektrische Leitungen miteinander verbundene Teilnehmerstationen über eine Zentralstation mit mobilen Sende-/Empfangsstationen in Verbindung treten können, sind weit verbreitet und zum Beispiel aus der DE-A-2 620 250, der DE-A-2 634 681, der DE-A-2 703 767 oder aus «BOSCH-Funk/Technische Informationen», Ausgabe 1978, Automatik-Autotelefon OF 4 C, bekannt. Wenn bei den bekannten Funkanlagen von einer Teilnehmerstation aus eine mobile Sende-/Empfangsstation angerufen wird, und diese meldet sich nicht, so kann der ortsfeste Teilnehmer nicht feststellen, ob er den mobilen Teilnehmer funkmässig gar nicht erreicht hat oder ob sich lediglich die Bedienungsperson nicht meldet. Dies hat den Nachteil, dass der Anrufer oft lange Zeit vergeblich die mobile Station zu erreichen sucht, obwohl eine Funkverbindung derzeit gar nicht möglich ist, da sich die mobile Station zum Beispiel ausserhalb des Funkversorgungsbereichs befindet. Dadurch wird oft der Funkkanal unnötig lange blockiert.

Hat die Teilnehmerstation vergeblich versucht, die mobile Station zu erreichen, so muss sie diesen Versuch zu späteren Zeitpunkten immer wieder wiederholen, da die mobile Station nicht weiss, dass sie angerufen worden ist. Wird bei einer aufwendigeren Funkanlage in der mobilen Station bei Registrierung eines Selektivrufs eine Markierung, zum Beispiel eine Glühlampe, eingeschaltet, so weiss der Teilnehmer bei Rückkehr zu seinem Funkgerät zwar, dass er angerufen worden ist. Er weiss jedoch nicht, von wem dieser Anruf kam, so dass er sämtliche möglichen Teilnehmerstationen anrufen muss. Befand sich die mobile Station zur Zeit des Selektivrufs ausserhalb des Versorgungsbereichs, so ist auch diese Information nicht möglich.

Es ist weiterhin ein Funkübertragungssystem bekannt (DE-A-2 537 683), bei welchem die von der Zentralstation durch einen Selektivruf gerufene mobile Funkstation ein Quittungssignal an die Zentralstation sendet. Das Quittungssignal bewirkt dort das Einschalten eines Signalgenerators, der einen für die anwählende Teilnehmerstation bestimmten Rufton erzeugt. Der Rufton signalisiert der Teilnehmerstation, dass die gewünschte Verbindung zustande gekommen ist.

### Aufgabe der Erfindung

Der Erfindung liegt die Aufgabe zugrunde, bei einer Funkanlage gemäss dem Oberbegriff des Anspruchs 1 unnötige Belegungszeiten der Funkkanäle zu vermeiden und damit die Funkanlage besser auszunutzen.

### Vorteile der Erfindung

Die erfindungsgemässe Funkanlage mit den kennzeichnenden Merkmalen des Hauptanspruchs hat demgegenüber den Vorteil, dass die anrufende Teilnehmerstation, zum Beispiel durch verschiedene akustische Signalfolgen, sofort weiss, ob eine Funkverbindung zustande gekommen ist oder nicht. Wird festgestellt, dass eine Funkverbindung derzeit nicht möglich ist, so kann der Funkkanal sofort wieder freigegeben werden.

Die erfindungsgemässe Funkanlage in der Weiterbildung nach Patentanspruch 4 hat den Vorteil, dass bei Nichterreichen der mobilen Station, sei es, weil sich diese ausserhalb des Funkversorgungsbereichs befindet oder weil sich die Bedienungsperson nicht meldet, eine Information der Teilnehmerstation, vorzugsweise die zugeordnete Rufnummer, in der Zentralstation gespeichert wird. Dabei wird in der mobilen Station wiederum eine Markierung gesetzt, die bei Rückkehr der Bedienungsperson dieser mitteilt, dass sie angerufen worden ist. Durch Anwählen einer festlegbaren Nummer kann dann von der mobilen Station aus entweder die gespeicherte Information abgefragt werden oder über diese direkt die betreffende Teilnehmerstation erreicht werden.

Durch die in den Unteransprüchen aufgeführten Massnahmen sind vorteilhafte Weiterbildungen und Verbesserungen der im Hauptanspruch angegebenen Funkanlage möglich. Besonders vorteilhaft ist es, nach einer festlegbaren Anzahl von Selektivrufen die Nummer der anrufenden Teilnehmerstation in der Zentralstation einzuspeichern und für den Fall, dass keine automatische Rückmeldung der angesprochenen mobilen Station erfolgt ist, weitere Selektivrufe in zeitlich grösseren Abständen zu erzeugen. Dies hat den Vorteil, dass die mobile Station bei Wiedereintritt in den Funkversorgungsbereich sofort erfährt, dass sie angerufen worden ist.

### Zeichnung

Ein Ausführungsbeispiel der Erfindung ist in der Zeichnung dargestellt und in der nachfolgenden Beschreibung näher erläutert. Es zeigen:

Fig. 1 ein Ausführungsbeispiel einer Zentralstation,

Fig. 2 ein Ausführungsbeispiel einer mobilen Sende-/Empfangsstation,

Fig. 3 eine Anordnung von Datentelegrammen zur Erläuterung der Wirkungsweise der verschiedenen Rückmeldemöglichkeiten und

Fig. 4 Datentelegramme zur Erläuterung der Wirkungsweise des Einspeichervorgangs.

### Beschreibung des Ausführungsbeispiels

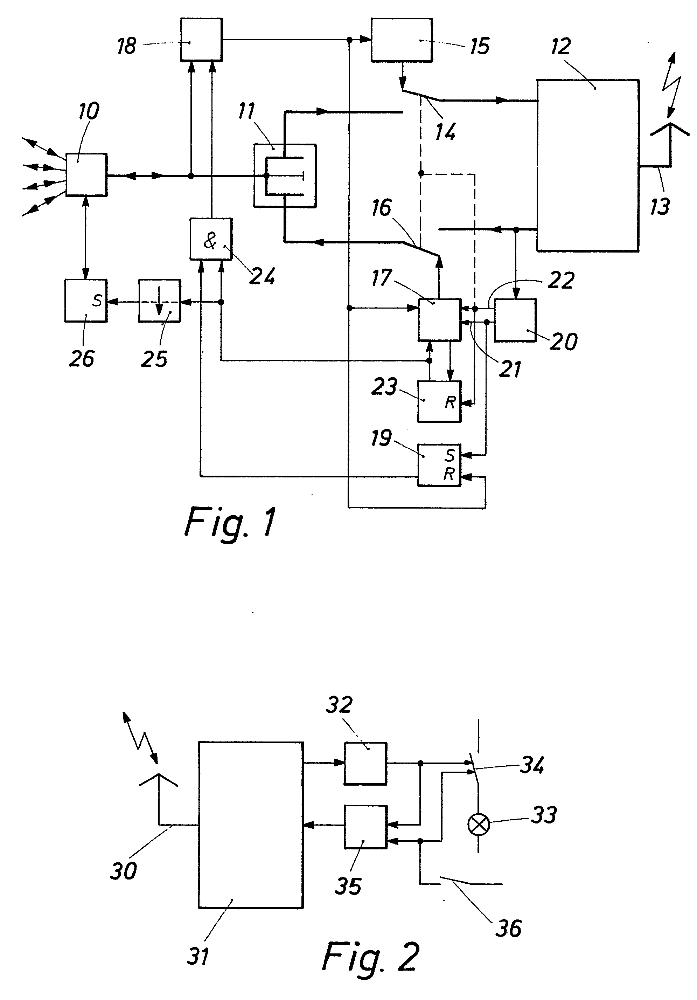

An die Wähleinrichtung 10 der in Fig. 1 dargestellten Zentralstation ist eine Vielzahl von nicht näher dargestellten, über elektrische Leitungen verbundenen Teilnehmerstationen angeschlossen. Die Wähleinrichtung 10 ist über eine an sich bekannte Gabelschaltung 11 für den Sprechweg mit dem HF-Sende-/Empfangsteil 12 verbunden, an das eine Antenne 13 angeschlossen ist. In den Zuleitungsweg von der Gabelschaltung 11 zum HF-Teil 12 ist ein Umschalter 14 geschaltet, der in seiner ersten, dargestellten Schaltstellung den Ausgang eines Selektivrufgebers 15 mit dem HF-Teil 12 und in seiner zweiten Schaltstellung die Gabelschaltung 11 mit dem HF-Teil 12 verbindet.

In die Rückführungsleitung vom HF-Teil 12 zur Gabelschaltung 11 ist ein weiterer Umschalter 16 geschaltet, der in seiner ersten, dargestellten Schaltstellung den Ausgang eines Signalgenerators 17 mit der Gabelschaltung und in seiner zweiten Schaltstellung den HF-Teil 12 mit der Gabelschaltung 11 verbindet.

Der Ausgang der Wähleinrichtung 10 ist weiterhin mit einer Codier- und Speichereinrichtung 18 verbunden, deren Ausgang mit einem Eingang des Selektivrufgebers 15, einem Eingang des Signalgenerators 17 und dem Rücksetzeingang R eines Flipflops 19 verbunden ist.

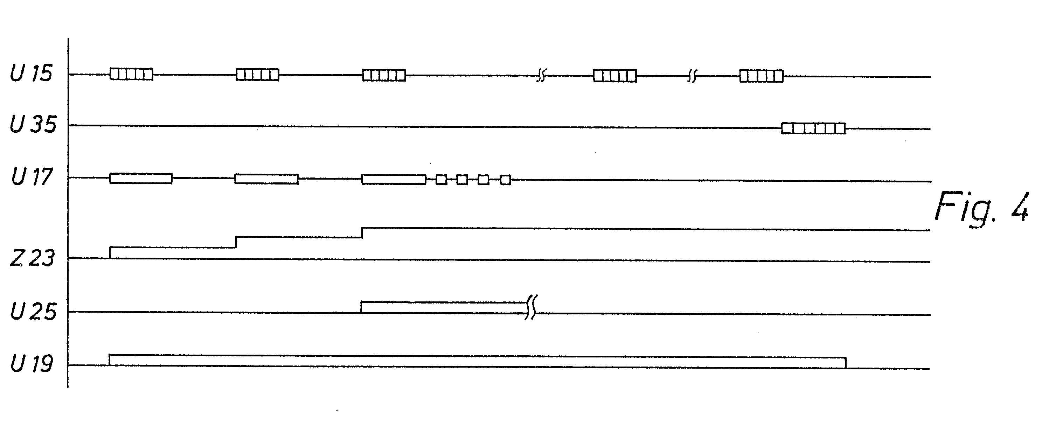

Der der Gabelschaltung 11 zugewandte Ausgang des HF-Teils 12 ist weiterhin mit einer Decodiereinrichtung 20 verbunden, die zwei Steuerausgänge 21, 22 aufweist. Der Steuerausgang 21 wird wirksam, wenn die Decodiereinrichtung 20 eine automatische Empfangsquittung von einer mobilen Station empfängt, und veranlasst den Signalgenerator 17, eine bestimmte Signalfolge zu erzeugen. Weiterhin wird ein Setzsignal für das Flipflop 19 bewirkt. Der Steuerausgang 22 wird wirksam, wenn die Decodiereinrichtung 20 eine manuell erzeugte Empfangsquittung von einer mobilen Station erhält. Durch diesen Steuerausgang wird zum einen eine andere Signalfolge im Signalgenerator 17 erzeugt, eine Zähleinrichtung 23 rückgesetzt, und schliesslich wird noch das Umschalten der beiden Umschalter 14, 16 bewirkt. Ein die Steuersignale für die Signalfolgen führender Ausgang des Signalgenerators 17 ist mit dem Zähleingang der Zähleinrichtung 23 verbunden. Ebensogut könnte dieser Zähleingang mit dem Steuersignal zur Erzeugung der Selektivrufe verbunden sein, da synchron mit den Selektivrufen die Signalfolgen erzeugt werden. Ein bei einem bestimmten Zählerstand ein Signal führender Ausgang der Zähleinrichtung 23 – gemäss Fig. 4 der Zählerstand 4 – ist mit einem weiteren Eingang des Signalgenerators 17 verbunden zur Erzeugung einer weiteren Signalfolge. Weiterhin ist dieser Zählerausgang mit einem Eingang eines UND-Gatters 24 sowie mit dem Triggereingang eines Zeitglieds 25 verbunden. Ein Ausgang des Flipflops 19 ist an einen weiteren Eingang des UND-Gatters 24 angeschlossen. Der Ausgang des UND-Gatters 24 ist mit einem Steuereingang der Codier- und Speichereinrichtung 18 verbunden, um diese auf die Selektivrufsteuerung mit grösseren zeitlichen Abständen umzuschalten. Im einfachsten Fall kann dieser Steuereingang auch der Abschaltung der Selektivrufe dienen. Durch den Ausgang des Zeitglieds 25 wird während dessen Haltezeit der Speichereingang einer zum Beispiel als RAM ausgebildeten Speichereinrichtung 26 freigegeben, so dass während dieser Haltezeit Einspeichervorgänge vorgenommen werden können. Diese Speichereinrichtung 26 ist mit der Wähleinrichtung 10 verbunden.

In Fig. 2 sind die für das Verständnis der vorliegenden Anmeldung notwendigen Baugruppen einer (mobilen) Sende-/Empfangsstation dargestellt. Solche Stationen sind vorzugsweise mobil in Kraftfahrzeugen eingebaut, sie können jedoch auch Feststationen sein. Das Funksignal gelangt über eine Antenne 30 zum HF-Sende-/Empfangsteil 31, wo es demoduliert wird. Als digitales Signal wird es einer Decodiereinrichtung 32 zugeführt, in der ein dieser speziellen Station zugeordneter Selektivruf erkannt wird. Liegt ein solcher vor, so wird zum einen eine Markierung gesetzt bzw. im dargestellten Fall eine Lampe 33 durch eine Schaltvorrichtung 34 eingeschaltet. Weiterhin wird durch den Ausgang der Decodiereinrichtung 32 ein Signalgenerator 35 zur automatischen Erzeugung fest codierter Funksignale eingeschaltet. Die Bedienungsperson meldet sich durch Betätigung der Schaltvorrichtung 36, wodurch im Signalgenerator 35 eine andere Folge fest codierter Funksignale erzeugt wird. Weiterhin wird über die Schaltvorrichtung 34 die Lampe 33 wieder ausgeschaltet.

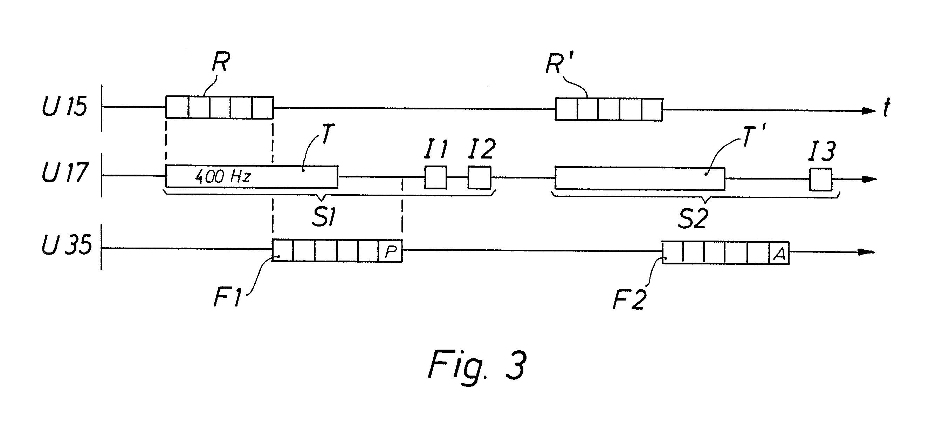

Die Wirkungsweise des in den Fig. 1 und 2 dargestellten Ausführungsbeispiels soll im folgenden an Hand der in den Fig. 3 und 4 dargestellten Datentelegramme erläutert werden. Will eine Teilnehmerstation eine Sende-/Empfangsstation gemäss Fig. 2 anwählen, so gelangt ihr Wählsignal über die Wähleinrichtung 10 zur Codier- und Speichereinrichtung 18. Die sequentiell eingehenden Wähldaten werden codiert und gespeichert und schalten nach vollständigem Eingang den Selektivrufgeber 15 ein, der in Abhängigkeit dieser Daten einen entsprechenden Selektivruf U15 erzeugt. Dieser Selektivruf wird in festgelegten Zeitabständen, zum Beispiel alle fünf Sekunden, wiederholt und gelangt über den Umschalter 14 zum HF-Teil 12. Von dort wird er als Funksignal zu einer Station gemäss Fig. 2 übertragen. Gleichzeitig wird durch das Ausgangssignal der Codier- und Speichereinrichtung 18 der Signalgenerator 17 eingeschaltet, der ein tonfrequentes Rufsignal (zum Beispiel 400 Hz) von kurzer Dauer (zum Beispiel 0,5 s) synchron zu den Selektivrufen erzeugt. Dieses Rufsignal gelangt über den Umschalter 16 und die Wähleinrichtung 10 zur anwählenden Teilnehmerstation. Im dargestellten Fall besteht der Selektivruf U15 aus einer Fünf-Tonfolge. In Fig. 3 wird davon ausgegangen, dass eine Funkverbindung zustande kommt, dass sich also die angewählte Station im Funkversorgungsbereich befindet. Der Selektivruf wird von der Decodiereinrichtung 32 erkannt, und durch Ansteuerung des Signalgenerators 35 wird unmittelbar im Anschluss an den Selektivruf eine erste Folge von fest codierten Funksignalen abgesetzt, im dargestellten Fall eine Sechs-Tonfolge. Der letzte Ton kann zum Beispiel die Erkennung beinhalten, dass es sich um eine passive Quittung P handelt, die automatisch ohne Einwirkung der Bedienungsperson erzeugt wird. Diese passive Quittung wird in HF-Teil 12 empfangen und der Decodiereinrichtung 20 zugeführt, in der sie als solche erkannt wird. Demzufolge wird ein Steuersignal am Ausgang 21 erzeugt. Durch dieses Steuersignal wird der Signalgenerator 17 veranlasst, zwei weitere, kurze tonfrequente Signale zu erzeugen. Das längere sowie die beiden kürzeren Rufsignale werden über den Umschalter 16 und die Wähleinrichtung 10 der anwählenden Teilnehmerstation zugeführt, die aufgrund dieser speziellen Tonfolge erkennt, dass die Funkverbindung zustande gekommen ist.

Im zweiten, in Fig. 3 dargestellten Selektivruf wird davon ausgegangen, dass sich die Bedienungsperson in der mobilen Station gemäss Fig. 2 gemeldet hat, indem sie die Schaltvorrichtung 36 betätigt hat. Dadurch wird einmal die Lampe 33 gelöscht und weiterhin im Signalgenerator 35 eine andere Folge fest codierter Funksignale erzeugt, die eine aktive Quittung darstellen. Hier kann wiederum der letzte Ton der Sechs-Tonfolge diese aktive Quittung A enthalten. Weiterhin ist die Kennung der angesprochenen Station enthalten. Diese aktive Quittung wird wiederum im HF-Teil 12 empfangen und der Decodiereinrichtung 20 zugeführt, wodurch nunmehr ein Steuersignal am Ausgang 22 erzeugt wird. Durch dieses Steuersignal wird im Signalgenerator 17 anstelle der zwei kurzen, tonfrequenten Signale ein einziges Signal erzeugt, das wie beim erstenmal zur Teilnehmerstation übertragen wird und dieser mitteilt, dass die Bedienungsperson der angewählten Station den Sprechweg durchgeschaltet hat. Gleichzeitig werden die Umschalter 14 und 16 umgeschaltet, so dass nunmehr der Sprechverkehr in beide Richtungen über die Gabelschaltung 11 stattfinden kann. Über die Codier- und Speichereinrichtung 18 wird der Selektivrufgeber 15 sowie der Signalgenerator 17 abgeschaltet.

Anstelle des Meldesignals U17, bei dem die Unterscheidung zwischen keiner, einer passiven oder einer aktiven Quittung durch nachgesetzte Signale erfolgt, können diese Quittungen natürlich auch aus einem Einzelton bestimmter Höhe und Länge oder einem Mehrtonsignal bestimmter Kombination und Länge bestehen.

Bei den in Fig. 4 dargestellten Datentelegrammen ist der Fall gezeigt, dass eine Funkverbindung nicht zustande kommt, was sich durch Ausbleiben einer passiven und einer aktiven Quittung U35 äussert. Die synchron mit den Selektivrufsignalen U15 erzeugten Rufsignale U17 für die anrufende Teilnehmerstation weisen daher nicht mehr die kurzen Signale nach dem längeren Rufsignal auf. Die anrufende Teilnehmerstation erkennt dadurch, dass eine Funkverbindung nicht zustande gekommen ist. Die Zähleinrichtung 23 zählt die Rufsignale U 17 bis zu einem festlegbaren Zahlenwert – im dargestellten Fall dem Zahlenwert 3 – und gibt dann ein Ausgangssignal ab. Durch dieses Ausgangssignal wird einmal im Signalgenerator 17 eine andere Rufsignalfolge erzeugt, die im dargestellten Fall aus vier kurzen Rufsignalen nach dem längeren Rufsignal besteht. Dadurch erkennt die anrufende Teilnehmerstation, dass die Verbindung nunmehr unterbrochen wird, um den Funkkanal wieder freizugeben. Weiterhin wird der Teilnehmerstation dadurch signalisiert, dass sie ihre eigene Rufnummer nunmehr in die Speichereinrichtung 26 eingeben kann. Dies kann natürlich auch automatisch erfolgen. Dazu wird durch das am Ausgang der Zähleinrichtung 23 erzeugte Signal das Zeitglied 25 getriggert, durch das während der Haltezeit der Einspeichervorgang in die Speichereinrichtung 26 freigegeben wird.

Da die Funkverbindung nicht zustande gekommen ist, weiss die Sende-/Empfangsstation nicht, dass sie angerufen worden ist, auch wenn sie wieder in den Funkversorgungsbereich zurückkehrt. Um diese Information zu vermitteln, werden nach dem Einspeichervorgang in die Speichervorrichtung 26 in jeweils grösseren zeitlichen Abständen – in Fig. 4 durch zwei gewundene Linien angedeutet – weitere Selektivrufe mit einem Zusatzkriterium erzeugt. Dies wird durch ein Ausgangssignal am UND-Gatter 24 ausgelöst, das die Codier- und Speichereinrichtung 18 auf die Selektivrufe mit grösserem zeitlichen Abstand umschaltet. Dieses Ausgangssignal des UND-Gatters 24 wird dann erzeugt, wenn der Zählerstand der Zähleinrichtung 23 den vorbestimmten Wert erreicht hat und gleichzeitig das Flipflop 19 immer noch rückgesetzt ist. Diese weiteren Selektivrufe werden solange ausgesandt, bis von der angesprochenen Sende-/Empfangsstation eine passive Quittung erfolgt, also wenn diese Station wieder in den Funkversorgungsbereich zurückkehrt. Durch diese passive Quittung wird das Flipflop 19 über den Ausgang 21 der Decodiereinrichtung 20 gesetzt, wodurch das UND-Gatter 24 gesperrt wird, was zur Einstellung der Selektivrufe U15 mit grösserem zeitlichen Abstand führt. Der Empfang des Selektivrufs führt in der Sende-/Empfangsstation im einfachsten Fall zum Aufleuchten der Lampe 33, wodurch der Bedienungsperson angezeigt wird, dass ein Anruf erfolgt ist bzw. dass die Nummer des Anrufers in der Zentralstation gespeichert ist. Vorteilhafter ist jedoch die Einschaltung einer separaten optischen und/oder akustischen Anzeigevorrichtung, die durch das Zusatzkriterium des Selektivrufs bewirkt wird. Durch Einschalten, also durch Betätigung der Schalteinrichtung 36, erfolgt eine aktive Quittung, wodurch wiederum die Umschalter 14 und 16 in ihre andere Schaltstellung umgeschaltet werden. Es muss nun eine spezielle Code-Nummer gewählt werden, die vom HF-Teil 12 über den Umschalter 16 der Wähleinrichtung 10 zugeführt wird. Aufgrund dieser Code-Nummer wird dort der Speicherinhalt der Speichereinrichtung 26 ausgelesen und in einen Rufton für die zugeordnete Teilnehmerstation umgewandelt.

Anstelle der automatischen Verbindung zur Teilnehmerstation kann durch die gewählte Code-Nummer natürlich auch die gespeicherte Information in der Speichereinrichtung 26 abgerufen werden, so dass diese über den Umschalter 14 und den HF-Teil 12 zur Sende-/Empfangsstation übermittelt und angezeigt wird.

Nachdem ein solches Rückrufgespräch beendet ist, kann von der Wähleinrichtung 10 geprüft werden, ob weitere Rückrufnummern in der Speichereinrichtung 26 oder in anderen, nicht näher dargestellten Speichereinrichtungen gespeichert sind. Ist dies der Fall, wird in der Wähleinrichtung 10 ein Signal erzeugt, das über die Codier- und Speichereinrichtung 18 das Aussenden eines weiteren Selektivrufs veranlasst. Dieser neue Selektivruf bewirkt, wie bereits beschrieben, ein Einschalten der Lampe 33 oder der weiteren akustischen und/oder optischen Anzeigevorrichtung.

In einer einfacheren Version kann auf die Aussendung der weiteren Selektivrufe mit grösserem zeitlichen Abstand verzichtet werden. In diesem Fall ist es der jeweiligen mobilen Sende-/Empfangsstation überlassen, von selbst anzufragen, ob Rufnummern in der Zentralstation gespeichert sind.

Anstelle einer Zähleinrichtung 23 zur Festlegung der maximalen Anzahl von vergeblichen Selektivrufen kann diese Begrenzung natürlich auch durch ein Zeitglied festgelegt werden, wobei am Ende dessen Haltezeit die Selektivrufe abgeschaltet werden bzw. auf grössere zeitliche Abstände umgeschaltet werden.

Es sei noch festgehalten, dass die Einspeicherung der Rufnummer der anwählenden Teilnehmerstation in die Speichereinrichtung 26 der Zentralstation natürlich entsprechend abläuft, wenn nur (eine vorgebbare Anzahl von) passive Quittungen in der Zentralstation einlaufen, jedoch eine aktive Quittung ausbleibt.

Die beschriebenen Vorgänge können vorteilhaft auch durch einen Mikrorechner realisiert werden, insbesondere durch je wenigstens einen Mikrorechner in der Zentralstation und in den Sende-/Empfangsstationen.

## Patentansprüche

1. Funkanlage mit einer Zentralstation, an die über elektrische Leitungen mehrere Teilnehmerstationen angeschlossen sind, mit wenigstens einer Funksende- und -empfangsstation und mit einer Selektivrufeinrichtung (15) in der Zentralstation, die bei einer gewünschten Verbindung von einer Teilnehmerstation zu einer Funksende- und -empfangsstation eingeschaltet wird, wobei in der Funksende- und -empfangsstation Mittel (35) vorgesehen sind, die automatisch unmittelbar nach Empfang eines Selektivrufs ein festkodiertes Funksignal erzeugen, das in der Zentralstation dekodiert wird und eine bestimmte Signalfolge auslöst, welche an die Teilnehmerstation weitergeleitet wird und dort als eine das Zustandkommen der Funkverbindung kennzeichnende Information erkannt wird, dadurch gekennzeichnet, dass die Zentralstation der rufenden Teilnehmerstation eine erste Signalfolge (S1) übermittelt, wenn die gerufene Funkstation eine erste festkodierte Signalfolge (F1) als Quittung für einen empfangenen Selektivruf (R) und als Zeichen der Nichtgesprächsbereitschaft an die Zentralstation gesendet hat, und dass die Zentralstation der rufenden Teilnehmerstation eine zweite Signalfolge (S2) übermittelt, wenn die gerufene Funkstation eine zweite, sich von der ersten festkodierten Signalfolge unterscheidende Signalfolge (F2) als Quittung für einen empfangenen Selektivruf und als Zeichen der Gesprächsbereitschaft an die Zentralstation gesendet hat.

2. Funkanlage nach Anspruch 1, dadurch gekennzeichnet, dass die erste und die zweite Signalfolge (S1, S2) mit einem mit dem Aussenden des Selektivrufs (R) automatisch ausgelösten tonfrequenten Rufsignal (T) beginnen, dass sich an das Rufsignal der ersten Signalfolge (S1) zwei durch die erste festkodierte Signalfolge (F1) in der Zentralstation ausgelöste Tonimpulse (I1, I2) anschliessen und dass sich an das Rufsignal (T') der zweiten Signalfolge (S2) nur ein durch die zweite festkodierte Signalfolge (F2) in der Zentralstation ausgelöster Tonimpuls (I3) anschliesst.

3. Funkanlage nach einem der vorhergehenden Ansprüche, dadurch gekennzeichnet, dass jeder Sende-/Empfangsstation eine andere Folge von fest codierten Funksignalen als Antwortsignal zugeordnet ist.

4. Funkanlage nach Anspruch 1, dadurch gekennzeichnet, dass in der Zentralstation eine Speichereinrichtung (26) vorgesehen ist, in der von der anwählenden Teilnehmerstation an die Zentralstation übermittelte Informationen bei Nichtzustandekommen einer aktiven Verbindung zu einer Sende-/Empfangsstation gespeichert werden.

5. Funkanlage nach Anspruch 4, dadurch gekennzeichnet, dass die Informationen aus der Rufnummer der Teilnehmerstation bestehen.

6. Funkanlage nach einem der vorhergehenden Ansprüche, dadurch gekennzeichnet, dass in der wenigstens einen Sende-/Empfangsstation eine optische und/oder akustische Signaleinrichtung vorgesehen ist, die bei Erreichen eines Selektivrufs einschaltbar ist.

7. Funkanlage nach einem der vorhergehenden Ansprüche, dadurch gekennzeichnet, dass in der Zentralstation Mittel (19, 23, 24) vorgesehen sind, durch die nach Abgabe einer festlegbaren Zahl von Selektivrufen die Verbindung getrennt wird.

8. Funkanlage nach Anspruch 7, dadurch gekennzeichnet, dass nach der festlegbaren Anzahl von Selektivrufen der verbundenen Teilnehmerstation vom Signalgenerator (17) eine weitere Signalfolge zuführbar ist und dass die Speichereinrichtung (26) zur Einspeicherung von Informationen der Teilnehmerstation freigegeben wird.

9. Funkanlage nach Anspruch 8, dadurch gekennzeichnet, dass die Einspeicherzeit begrenzt ist.

10. Funkanlage nach einem der Ansprüche 7 bis 9, dadurch gekennzeichnet, dass nach der festlegbaren Anzahl von Selektivrufen ohne Rückmeldung der angesprochenen Sende-/Empfangsstation weitere Selektivrufe in zeitlich grösseren Abständen erzeugbar sind.

## Claims

1. A radio installation having a central station to which a plurality of subscriber stations is connected by way of electric leads, at least one radio transmitting and receiving station, and a selective call device (15) which is disposed in the central station and which is switched on when it is desired to establish communication between a subscriber station and a radio transmitting and receiving station, means (35) being provided in the radio transmitting and receiving station for producing, immediately after receiving a selective call, a fixedly coded radio signal which is decoded in the central station and initiates a specific train of signals which is transmitted to the subscriber station where it is recognised as information indicating that the radio communication has been established, characterised in that the central station transmits to the calling subscriber station a first train of signals (S1) when the called radio station has transmitted to the central station a first fixedly coded train of signals (F1) as an acknowledgement of a received selective call (R) and as an indication that it is not ready to receive a call, and that the central station transmits a second train of signals (S2) to the calling subscriber station when the called radio station has transmitted to the central station a second train of signals (F2), differing from the first fixedly coded train of signals, as an acknowledgement of a received selective call and as an indication that it is ready to receive a call.

2. A radio installation as claimed in claim 1, characterised in that the first and second trains of signals (S1, S2) commence with an audio-frequency call signal (T) which is automatically initiated with the transmission of the selective call (R), that two audio pulses (I1, I2) initiated in the central station by the first fixedly coded train of signals (F1) follow the call signal of the first train of signals (S1), and that only one audio pulse (I3) initiated in the central station by the second fixedly coded train of signals (F2) follows the call signal (T') of the second train of signals.

3. A radio installation as claimed in one of the preceding claims, characterised in that another train of fixedly coded radio signals is associated as an answering signal with each transmitting/receiving station.

4. A radio installation as claimed in claim 1, characterised in that there is provided in the central station a storage means (26) in which data transmitted from the calling subscriber station to the central station is stored when active communication is not established with a transmitting/receiving station.

5. A radio installation as claimed in claim 4, characterised in that the data comprises the call number of the subscriber station.

6. A radio installation as claimed in one of the preceding claims, characterised in that an optical and/or acoustic signal means is provided in the at least one transmitting/receiving station and can be switched on when a selective call is obtained.

7. A radio installation as claimed in one of the preceding claims, characterised in that there is provided in the central station means (19, 23, 24) by which the communication is interrupted after a predeterminable number of selective calls has been transmitted.

8. A radio installation as claimed in claim 7, characterised in that a further train of signals is feedable from the signal generator (17) to the connected subscriber station after the preterminable number of selective calls, and that the storage means (26) is cleared to store data from the subscriber station.

9. A radio installation as claimed in claim 8, characterised in that the storage time is limited.

10. A radio installation as claimed in one of the claims 7 to 9, characterised in that further selective calls are producible at greater intervals of time after the predeterminable number of selective calls without an answer-back signal from the called transmitting/receiving station.

**Revendications**

1. Installation radio avec une station centrale, à laquelle sont raccordées, par l'intermédiaire de plusieurs conducteurs électrique, plusieurs stations abonnées, avec au moins une station radio émettrice et réceptrice et avec un dispositif d'appel sélectif (15) dans la station centrale, qui est mis en circuit lors d'une liaison souhaitée entre une station abonnée et une station radio émettrice et réceptrice, des moyens (35) étant prévus dans la station radio émettrice et réceptrice, moyens qui automatiquement, après réception d'un appel sélectif, engendrent directement un signal radio codé qui est décodé dans la station centrale et qui déclenche une succession de signaux déterminés, laquelle est transmise à la station abonnée où elle est reconnue comme étant une information caractérisant l'établissement de la liaison radio, installation caractérisée en ce que la station centrale transmet à la station abonnée appelante, une première succession de signaux (S1) lorsque la station radio ainsi appelée a envoyé à la station centrale une première succession codée de signaux (F1) à titre d'accusé de réception pour un appel sélectif reçu (R) et à titre d'indication d'une non possibilité de conversation, et que la station centrale transmet à la station abonnée appelante, une seconde succession de signaux (S2) lorsque la station radio appelée a envoyé à la station centrale une seconde succession de signaux (F2), se différenciant de la première succession codée de signaux, à titre d'accusé de réception pour un appel sélectif reçu et comme indication de la possibilité de conversation.

2. Installation radio selon la revendication 1, caractérisée en ce que la première et la seconde succession de signaux (S1, S2) commencent par un signal d'appel de fréquences audibles (T) déclenchées automatiquement par l'émission de l'appel sélectif (R), et qu'au signal d'appel de la première succession de signaux (S1) font suite deux impulsions audibles (I1, I2) déclenchées dans la station centrale par la première succession codée de signaux (F1), tandis qu'au signal d'appel (T') de la seconde succession de signaux (S2) fait suite une seule impulsion audible (I3) déclenchée dans la station centrale par la seconde succession codée de signaux (F2).

3. Installation radio selon une des précédentes revendications, caractérisée en ce que, à chaque station émettrice et réceptrice est associée une autre succession de signaux radio codée à titre de signal de réponse.

4. Installation radio selon la revendication 1, caractérisée en ce qu'il est prévu dans la station centrale un dispositif de mémoire (26) dans lequel sont mémorisées les informations transmises à la station centrale à partir de la station abonnée à sélectionner, en cas de non établissement d'une liaison active vers une station émettrice et réceptrice.

5. Installation radio selon la revendication 4, caractérisée en ce que les informations consistent en le numéro d'appel de la station abonnée.

6. Installation radio selon une des revendications précédentes, caractérisée en ce qu'il est prévu dans la station émettrice et réceptrice au moins unique, un dispositif optique et/ou acoustique de signalisation susceptible d'être mis en circuit lors de l'obtention d'un appel sélectif.

7. Installation radio selon une des revendications précédentes, caractérisée en ce qu'il est prévu dans la station centrale des moyens (19, 23, 24) grâce auxquels après délivrance d'un nombre, susceptible d'être fixé, d'appels sélectifs, la liaison est coupée.

8. Installation radio selon la revendication 7, caractérisée en ce que, après le nombre susceptible d'être fixé d'appels sélectifs de la station abonnée reliée, une autre succession de signaux est susceptible d'être alimentée par un générateur de signaux (17) et que le dispositif de mémoire (26) est libéré pour la mémorisation d'informations de la station abonnée.

9. Installation radio selon la revendication 8, caractérisée en ce que le temps de mémorisation est limité.

10. Installation radio selon une des revendications 7 à 9, caractérisée en ce qu'après le nombre susceptible d'être fixé d'appels sélectifs, sans émission en retour de la station émettrice et réceptrice interrogée, d'autres appels sélectifs sont susceptibles d'être obtenus à des intervalles de temps plus importants.

Fig. 1

Fig. 2

Fig. 3

Fig. 4

0 017 898